# EUROPÄISCHE PATENTSCHRIFT

(11) **EP 1 222 376 B1**
(45) Veröffentlichungstag und Bekanntmachung des Hinweises auf die Patenterteilung: **30.03.2005**
(21) Anmeldenummer: 00974280.0
(22) Anmeldetag: 02.09.2000
(51) Int. Cl.: F02D 41/00

(54) **VERBRENNUNGSAUSSETZERERKENNUNG**
DETECTION OF COMBUSTION MISFIRING
PROCEDE DE RECONNAISSANCE DE RATES DE COMBUSTION

(30) Priorität: 30.09.1999 DE 19946873
(43) Veröffentlichungstag der Anmeldung: 17.07.2002
(73) Patentinhaber: ROBERT BOSCH GMBH, 70442 Stuttgart (DE)
(72) Erfinder: LEHNER, Michael, 75417 Mühlacker (DE); LOHMANN, Andrea, 70195 Stuttgart (DE)
(86) Internationale Anmeldenummer: PCT/DE2000/003024
(87) Internationale Veröffentlichungsnummer: WO 2001/023728

(56) Entgegenhaltungen:
- DE-C- 19 540 675
- US-A- 5 747 679
- US-A- 5 955 663

## Beschreibung

### Stand der Technik

Die Erfindung betrifft ein Verfahren zur Erkennung von Verbrennungsaussetzern bei Verbrennungsmotoren, wie sie für den Antrieb von Kraftfahrzeugen eingesetzt werden.

Verbrennungsaussetzer führen zu einem Anstieg der im Betrieb des Verbrennungsmotors emittierten Schadstoffe und können darüber hinaus zu einer Schädigung eines Katalysators im Abgastrakt des Motors führen. Zur Erfüllung gesetzgeberischer Forderungen zur On-Board-Überwachung abgasrelevanter Funktionen ist eine Erkennung von Verbren- . nungsaussetzern im gesamten Drehzahl- und Lastbereich notwendig. In diesem Zusammenhang ist es bekannt, dass beim Betrieb mit Verbrennungsaussetzern charakteristische Änderungen des Drehzahlverlaufs des Verbrennungsmotors gegenüber dem Normalbetrieb ohne Aussetzer auftreten. Durch den Vergleich dieser Drehzahlverläufe kann zwischen Normalbetrieb ohne Aussetzer und Betrieb mit Aussetzern unterschieden werden.

Ein auf dieser Basis arbeitendes Verfahren ist bereits aus der DE-OS 196 27 540 bekannt. Nach diesem bekannten Verfahren ist einem bestimmten Bereich der Kolbenbewegung jedes Zylinders ein als Segment bezeichneter Kurbelwellenwinkelbereich zugeordnet. Realisiert werden die Segmente bspw. durch Markierungen auf einem mit der Kurbelwelle gekoppelten Geberrad. Die Segmentzeit, in der die Kurbelwelle diesen Winkelbereich überstreicht, hängt unter anderem von der im Verbrennungstakt umgesetzten Energie ab. Aussetzer führen zu einem Anstieg der zündungssynchron erfassten Segmentzeiten. Nach dem bekannten Verfahren wird aus Differenzen von Segmentzeiten ein Maß für die Laufunruhe des Motors berechnet, wobei zusätzlich langsame dynamische Vorgänge, zum Beispiel der Anstieg der Motordrehzahl bei einer Fahrzeugbeschleunigung, rechnerisch kompensiert werden. Ein auf diese Weise für jede Zündung berechneter Laufunruhewert wird ebenfalls zündungssynchron mit einem vorbestimmten Schwellwert verglichen. Ein Überschreiten dieses gegebenenfalls von Betriebsparametern wie Last und Drehzahl abhängigen Schwellwerts wird als Aussetzer gewertet.

Aus der DE 195 40 675 ist ferner ein Verfahren zur Schätzung eines von einer Brennkraftmaschine erzeugten Drehmoments bekannt, das durch Auswerten von Zahnzeiten eine Kurbelwellengeschwindigkeit ermittelt. Gemessen werden die an einem als Zahnrad ausgebildeten Schwungrad auftretenden Zahnzeiten, aus denen nach einer Zahnfehlerkorrektur und einer vom Arbeitspunkt der Brennkraftmaschine abhängigen Filterung das auf die Kurbelwelle wirkende Drehmoment gewonnen wird. Um Fehler und Messrauschen zu reduzieren, ist es vorgesehen, die Segmentlänge in Abhängigkeit vom Betriebspunkt über die Last und der Drehzahl der Brennkraftmaschine zu verändern, zur Erkennung von Verbrennungsaussetzern.

Die Zuverlässigkeit eines Verfahrens zur Erkennung von Verbrennungsaussetzern hängt entscheidend von der Genauigkeit ab, mit der die Drehzahlunterschiede der Kurbelwelle, die für Aussetzer charakteristisch sind, aus den Segmentzeiten ermittelt werden können.

Vor diesem Hintergrund besteht die Aufgabe der Erfindung darin, diese Genauigkeit weiter zu steigern.

Diese Aufgabe wird mit der Merkmalskombination des Anspruchs 1 gelöst.

Ein wesentliches Element der Lösung besteht darin, dass
- die Lage der Winkelsegmente relativ zu einem Bezugspunkt der Bewegung der Kolben des Verbrennungsmotors und/oder
- die Winkelausdehnung der Winkelsegmente von Betriebsparametern des Verbrennungsmotors abhängig ist.

Die Erfindung basiert auf der Erkenntnis, daß die bisher bekannte Festlegung einer einzigen Segmentlage für den ganzen Motorbetriebsbereich nicht optimal ist. Erfindungsgemäß hängt die Lage der Segmente von Betriebsparametern des Motors ab. Geeignete Betriebsparameter, von denen Beginn und Länge der Segmente abhängen kann, sind bspw. das Drehmoment, die Last oder die Zylinderfüllung und die Drehzahl des Verbrennungsmotors.

### Vorteile der Erfindung

Durch die idealere Lage und Länge der Segmentzeiten erhöht sich der Störabstand, d.h. der Abstand zwischen dem durch Aussetzer gestörten Laufunruhesignal zu dem ungestörten Laufunruhesignal.

Damit verbessert sich die Erkennungsqualität. Die damit verbundene Steigerung der Empfindlichkeit erlaubt auch die Detektion kleinerer Unterschiede in den Verbrennungen, bspw. durch unerwünscht unterschiedliche Einspritzmengen, die durch Bildung von Verbrennungsrückständen an den Einspritzventilen hervorgerufen werden können.

Daraus lassen sich dann auf der Basis der Laufunruhe Eingriffe in die Einspritzung zum Ausgleich unterschiedlicher Einspritzmengen realisieren.

### Zeichnung

Ausführungsbeispiele der Erfindung werden im folgenden mit Bezug auf die Zeichnungen beschrieben.

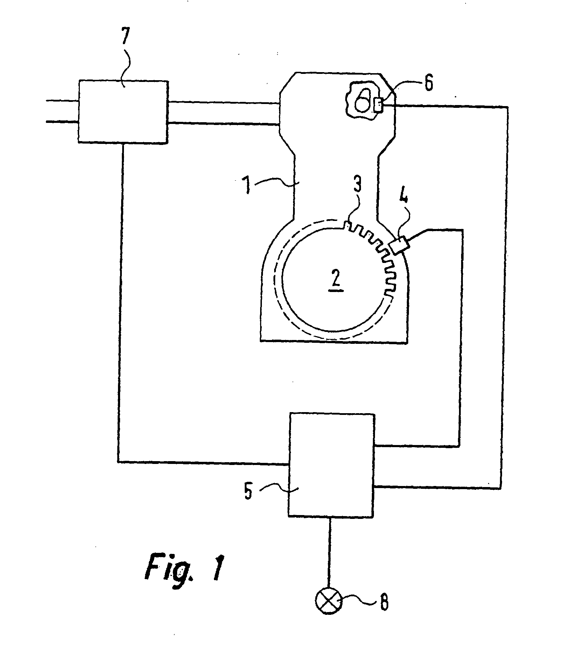

Im einzelnen zeigt Figur 1 das technische Umfeld der Erfindung.

Fig. 2 zeigt Einzelheiten der Drehzahlsensorik und den zeitlichen Verlauf des Signals des Drehzahlsensors 4 an der Kurbelwelle des Verbrennungsmotors plus Phasensignal des Sensors 6 an der Nockenwelle.

Figur 3 verdeutlicht das bekannte Prinzip der Bildung von Segmentzeiten als Basis eines Maßes für die Laufunruhe auf der Basis von Drehzahlmessungen.

Fig. 4 zeigt eine mögliche Zuordnung unterschiedlicher Segmentlängen und -lagen zu unterschiedlichen Betriebsbereichen des Verbrennungsmotors.

Fig. 5 offenbart ein Flußdiagramm als Ausführungsbsp. des erfindungsgemäßen Verfahrens.

Figur 1 zeigt eine Brennkraftmaschine 1 mit einem Winkelgeberrad 2, das Markierungen 3 trägt, sowie einen Winkelsensor 4, ein Steuergerät 5, einen Phasensensor 6, ein Mittel 7 zur Erfassung der Luftmenge, die in den Verbrennungsmotor strömt sowie eine Fehlerlampe 8.

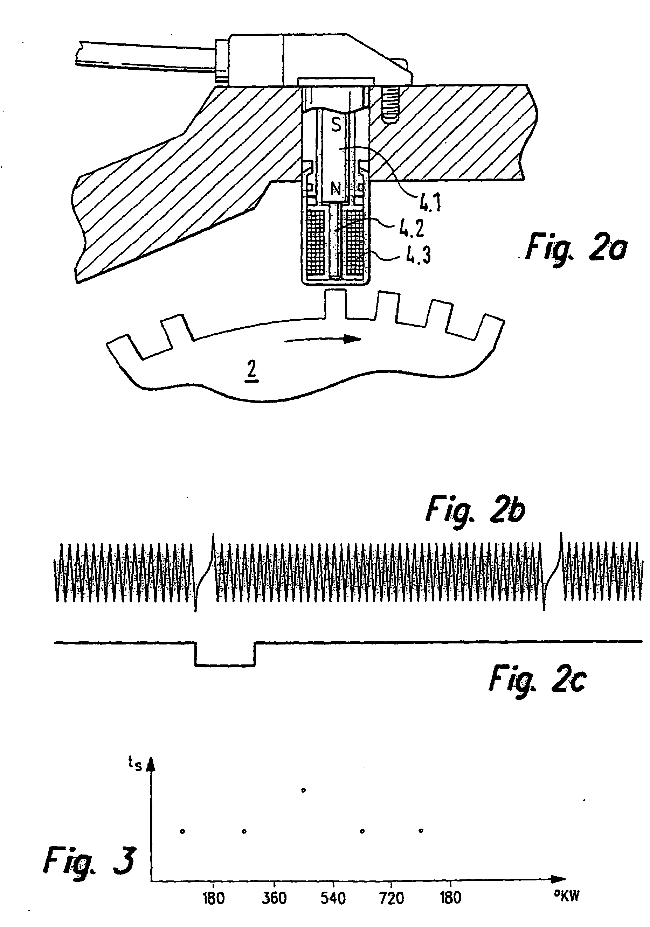

Fig. 2 a zeigt Details des Drehzahlgebersystems aus Winkelgeberrad 2 und Winkelsensor 4. Das Winkelgeberrad ist bspw. auf der Kurbelwelle als ferromagnetisches Geberrad mit Platz für 60 Zähne angebracht, wobei zwei Zähne (Zahnlücke) ausgelassen sind. Der induktive Drehzahlsensor tastet diese Zahnfolge von 58 Zähnen ab. Er besteht aus einem Permanentmagneten 4.1 und einem Weicheisenkern 4.2 mit Kupferwicklung. Passieren die Geberradzähne den Sensor, ändert sich in ihm der magnetische Fluß. Es wird eine Wechselspannung induziert, wie sie in Fig. 2 b dargestellt ist.

Das Steuergerät erkennt die Zahnlücke an dem vergrößerten Abstand der Signalflanken. Die Zahnlücke ist einer definierten Kurbelwellenposition zugeordnet, die einen festen Bezug zu dem oberen Totpunkt (OT) des ersten Zylinders besitzt. Das in Fig. 2 c unten dargestellte Signal des Phasensensors 6 erlaubt die Unterscheidung zwischen Ladungswechsel-OT und Zünd-OT. Dazu liefert Sensor 6 in Form einer Markierung im Signal eine Information über die Winkelposition der Kurbelwelle relativ zur Nockenwelle. Da sich die Kurbelwelle beim 4-Takt-Motor mit doppelter Nockenwellenfrequenz dreht, reicht hierfür die Information aus, ob die aktuelle Nockenwellenposition der ersten oder der zweiten Kurbelwellendrehung zugeordnet ist.

Trifft die Markierung des Signals des Phasensensors mit der Lücke im Signal des Drehzahlsensors zusammen, erkennt das Steuergerät den Zünd-OT des ersten Zylinders. Mit jeder folgenden positiven oder negativen Flanke zählt es die Kurbelwellenstellung um bspw. 6 ° weiter.

Aus der Gesamtzahl der Zähne und der Zylinderzahl kann das Steuergerät die Zünd-OT der übrigen Zylinder erkennen. Bei 4 Zylindern und einem 60-2-Geberad folgen die Zünd-OT im Abstand von jeweils 28 bzw. 30 Zähnen aufeinander. Zur Bildung von Segmentzeiten wird nun bspw. 15 Zähne vor dem Zünd-OT eine Zeitmessung für ein Winkelsegment gestartet, das sich bspw. über 30 Zähne erstreckt. Die Auswahl von Beginn und Länge ermöglicht beliebige Längen und Lagen des Segmentes, zwischen denen betriebsparameterabhängig umgeschaltet werden kann.

Die Zeitdauern ts, in denen die Kurbelwelle die so definierten Segmente überstreicht, werden in dem als Rechner realisierten Steuergerät 5 zu einem Maß Lut für die Laufunruhe der Brennkraftmaschine weiterverarbeitet.

In der Figur 3 sind die Zeiten ts aufgetragen, in denen die Winkelbereiche durch die Drehbewegung der Kurbelwelle überstrichen werden. Dabei ist ein Aussetzer in einem Zylinder angenommen. Der mit dem Aussetzer verbundene Drehmomentausfall führt zu einem Anstieg der zugehörigen Zeitspanne ts. Die Zeitspannen ts stellen damit bereits ein Maß Lut für die Laufunruhe dar, das prinzipiell zur Erkennung von Aussetzern geeignet ist.

Typischerweise werden pro Zündung ein oder zwei Segmentzeiten pro Zündung gebildet. Bei der Bildung einer Segmentzeit pro Zündung und dem Ausnutzen aller Markierungen des Geberrades ergibt sich eine Segmentlänge von 720° dividiert durch die Zahl der Zylinder. Bei einem 4-Zylindermotor führt dies zu einem Segment von 180° Länge, das bspw. symmetrisch zum Zünd-OT angeordnet sein kann. Bislang hat man feste Längen und Anordnungen verwendet, die bspw. für die erkennungskritischen Bereiche von niedriger Last und hoher Drehzahl optimiert waren. Bei niedrigen Drehzahlen würde sich aber z.B. eine andere Segmentlage von 126 ° Kurbelwinkel vor OT bis 54 ° Kurbelwinkel nach OT als geeigneter erweisen.
Eine Überlappung aufeinanderfolgender Segmente ist ebenfalls möglich, bspw. durch eine Segmentlänge > 180 ° KW bei einem 4 - Zylindermotor.

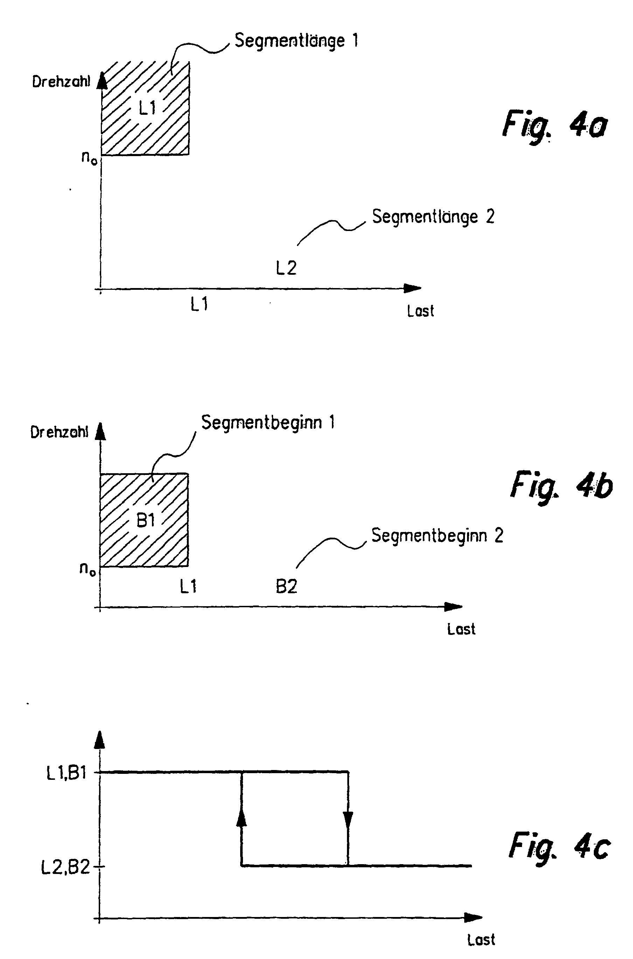

Erfindungsgemäß wird betriebspunktabhängig zwischen mehreren Segmentlängen und Segmentlagen umgeschaltet. Zum Beispiel wird bei hohen Drehzahlen die Segmentzeit bei einem 4-Zylinder-Motor von 108 ° KW vor OT bis 72 ° KW nach OT gebildet (Segmentbeginn 1 in Fig. 4b) und bei niedrigen Drehzahlen von 126 ° KW vor OT bis 54 ° KW nach OT (Segmentbeginn 2 in Fig. 4b).

Man kann sich aber auch eine Umschaltung über 3 oder mehr Bereiche vorstellen.

Ebenso kann die Länge der Segmente betriebspunktabhängig variiert werden, so daß bspw. bei hohen Drehzahlen Segmente von 180 ° KW (Segmentlänge 1 in Fig. 4a) und bei niedrigen Drehzahlen Segmente von 162 ° KW Länge (Segmentlänge 2 in Fig. 4a) gebildet werden.

Die Umschaltung zwischen verschiedenen Lagen und zwischen verschiedenen Längen kann auch kombiniert werden.

Bei der Umschaltung kann anstelle fester Grenzen eine Hysterese vorgesehen sein.

Dies ist als Beispiel in der Fig. 4c dargestellt. Dort wird beim Übergang von niedriger Last zu hoher Last die Bereichsumschaltung vom Bereich L1 und/oder B1 zum BereichL2 und/oder B2 bei einem anderen Lastwert vorgenommen als beim Übergang aus der umgekehrten Richtung.

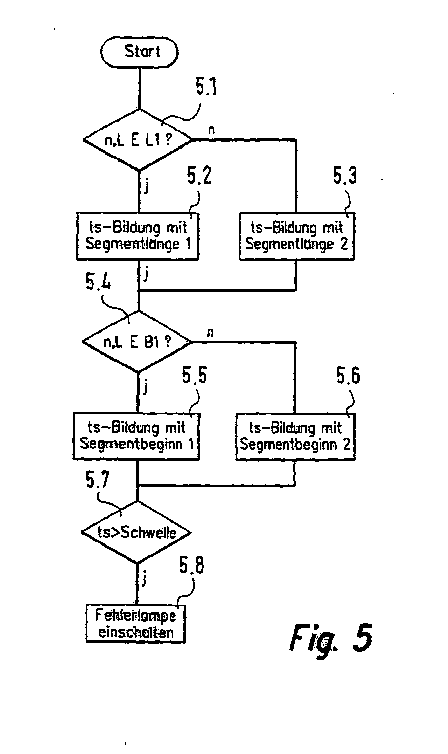

Fig. 5 zeigt ein Flußdiagramm als Ausführungsbeispiel des erfindungsgemäßen Verfahrens, das durch ein übergeordnetes Motorsteuerungsprogramm zyklisch aufgerufen wird (Schritt "Start"). Im Schritt 5.1 erfolgt eine Prüfung, ob die Drehzahl n und die Last L in einem Breich L1 liegen. Wird dies bejaht, folgt im Schritt 5.2 die Segmentzeitbildung mit der Segmentlänge 1 (Vergleiche Fig. 4a). Andernfalls erfolgt im Schritt 5.3 die Segmentzeitbildung mit der Segmentlänge 2.

Daran schließt sich auf analoge Weise die Auswahl des Segmentbeginns in den Schritten 5.4 bis 5.6 an. Mit den Segmentzeiten, die auf der Basis der ausgewählten Segmentlängen und Segmentlagen ermittelt werden, erfolgt eine Erkennung von Verbrennungsaussetzern. Dazu dient in dem dargestellten Ausführungsbeispiel der Schritt 5.7. Überschreiten die Segmentzeiten einen vorbestimmten Schwellwert, wird im Schritt 5.8 die Fehlerlampe eingeschaltet. Dem Einschalten der Fehlerlampe kann selbstverständlich eine statistische Absicherung der Fehlermeldung durch Auswerten der Häufigkeit der Schwellwertüberschreitunggen (Aussetzer) im Verhältnis zur Zahl der regulären Verbrennungen oder zur Zahl der Arbeitstakte (Verbrennungen plus Aussetzer) vorgeschaltet sein.

## Patentansprüche

1. Verfahren zur Erkennung von Verbrennungsaussetzern bei Verbrennungsmotoren (1) auf der Basis einer Auswertung von Segmentzeiten, in denen eine Welle des Verbrennungsmotors (1) vorbestimmte Winkelsegmente überstreicht, **dadurch gekennzeichnet, dass** die Lage der Winkelsegmente relativ zu einem Bezugspunkt (OT) der Bewegung der Kolben des Verbrennungsmotors (1) von wenigstens einem Betriebsparameter des Verbrennungsmotors (1) abhängig ist.

2. Verfahren nach Anspruch 1, **dadurch gekennzeichnet, dass** weiterhin die Winkelausdehnung der Winkelsegmente berücksichtigt wird und dass die Winkelausdehnung der Winkelsegmente von wenigstens einem Betriebsparameter des Verbrennungsmotors (1) abhängig ist

3. Verfahren nach Anspruch 1 oder 2, **gekennzeichnet durch** eine Abhängigkeit von Last und/oder Drehzahl des Verbrennungsmotors.

4. Verfahren nach Anspruch 1, 2 oder 3, **gekennzeichnet durch** eine Abhängigkeit vom Drehmoment des Verbrennungsmotors.

5. Verfahren nach Anspruch 3 oder 4, **dadurch gekennzeichnet, dass** die Abhängigkeit von Lage und/oder Länge der Winkelsegmente zusätzlich von der Richtung der Änderung des wenigstens einen Betriebsparameters abhängig ist.

## Claims

1. Method for the detection of combustion misfires in internal combustion engines (1) on the basis of an evaluation of segment times in which a shaft of the internal combustion engine (1) sweeps over predetermined angular segments, **characterized in that** the position of the angular segments in relation to a reference point (TDC) of the movement of the pistons of the internal combustion engine (1) is dependent on at least one operating parameter of the internal combustion engine (1).

2. Method according to Claim 1, **characterized in that**, furthermore, the angular extent of the angular segments is taken into account, and **in that** the angular extent of the angular segments is dependent on at least one operating parameter of the internal combustion engine (1).

3. Method according to Claim 1 or 2, **characterized by** a dependence on the load and/or the rotational speed of the internal combustion engine.

4. Method according to Claim 1, 2 or 3, **characterized by** a dependence on the torque of the internal combustion engine.

5. Method according to Claim 3 or 4, **characterized in that** the dependence on the position and/or the length of the angular segments is additionally dependent on the direction of the change of the at least one operating parameter.

## Revendications

1. Procédé de reconnaissance de ratés de combustion dans des moteurs à combustion interne (1) sur la base d'une exploitation des temps de segment dans lesquels l'arbre du moteur à combustion interne (1) balaye des segments angulaires prédéfinis,
**caractérisé en ce que**
la position des segments angulaires par rapport à un point de référence (OT) du mouvement du piston du moteur à combustion interne (1) dépend d'au moins un paramètre de fonctionnement du moteur à combustion interne (1).

2. Procédé selon la revendication 1,
**caractérisé en ce que**
l'expansion angulaire des segments angulaires est de plus prise en compte et elle dépend au moins d'un paramètre de fonctionnement du moteur à combustion interne (1).

3. Procédé selon la revendication 1 ou 2,
**caractérisé par**
une dépendance de la charge et/ou de la vitesse de rotation du moteur à combustion interne.

4. Procédé selon la revendication 1, 2 ou 3,
**caractérisé par**
une dépendance du couple de rotation du moteur à combustion interne.

5. Procédé selon la revendication 3 ou 4,
**caractérisé en ce que**
la dépendance de la charge et/ou des longueurs des segments angulaires dépend de plus du sens de la variation de l'au moins un paramètre de fonctionnement.
